(19) Europäisches Patentamt
European Patent Office
Office européen des brevets

(11) **EP 1 860 713 B1**

(12) **FASCICULE DE BREVET EUROPEEN**

(45) Date de publication et mention
de la délivrance du brevet:
**01.09.2010 Bulletin 2010/35**

(51) Int Cl.:
**H01M 4/50** *(2010.01)* **H01M 4/52** *(2010.01)*

(21) Numéro de dépôt: **07010232.2**

(22) Date de dépôt: **23.05.2007**

(54) **Composé d'insertion du lithium utilisable comme matière active cathodique d'un générateur électrochimique rechargeable au lithium**

Lithiumeinlagerungsverbindung verwendbar als kathodisches Aktivmaterial in einem wiederaufladbaren elektrochemischen Lithium-Generator

Lithium insertion compound as cathodic active material for a lithium rechargeable electrochemical generator

(84) Etats contractants désignés:
**DE FR GB**

(30) Priorité: **24.05.2006 FR 0604670**

(43) Date de publication de la demande:
**28.11.2007 Bulletin 2007/48**

(73) Titulaire: **SAFT GROUPE SA**
**93170 Bagnolet (FR)**

(72) Inventeurs:
• **Peres, Jean-Paul**
**33700 Merignac (FR)**
• **Gillot, Stéphane**
**33440 Ambares (FR)**
• **Chouquais, Frédéric**
**33240 Aubie et Espessas (FR)**
• **Audry, Claudette**
**33520 Bruges (FR)**
• **Lecerf, André**
**35740 Pace (FR)**

(74) Mandataire: **Hirsch & Associés**
**58, avenue Marceau**
**75008 Paris (FR)**

(56) Documents cités:
**EP-A- 1 311 013** **US-A1- 2002 192 148**
**US-A1- 2003 211 235** **US-A1- 2004 202 938**
**US-B1- 6 337 158**

• **FEY G T-K ET AL: "Preparation and electrochemical properties of high-voltage cathode materials, LiMyNi0.5-yMn1.5O4 (M=Fe, Cu, Al, Mg" JOURNAL OF POWER SOURCES, ELSEVIER, AMSTERDAM, NL, vol. 115, no. 2, 10 avril 2003 (2003-04-10), pages 332-345, XP004416034 ISSN: 0378-7753**
• **KIM J -H; MYUNG S -T; YOON C S; OH I -H; SUN Y -K: "Effect of Ti substitution for Mn on the structure of LiNi0.5Mn1.5-xTixO4 and their electrochemical properties as lithium insertion material" JOURNAL OF THE ELECTROCHEMICAL SOCIETY, vol. 151, no. 11, 2004, pages A1911-A1918, XP002411949**

EP 1 860 713 B1

**Description**

DOMAINE TECHNIQUE

L'invention se rapporte à un composé destiné à être utilisé comme matière active pour électrode positive d'un générateur électrochimique rechargeable au lithium. Ce composé est adapté au fonctionnement à haute tension, notamment à une tension supérieure à 4,5 Volts par rapport à Li/Li$^+$. Le générateur électrochimique rechargeable au lithium incorporant ce composé présente une durée de vie et une aptitude à la puissance améliorées.

ETAT DE LA TECHNIQUE

L'accumulateur lithium-ion actuel (anode à base de carbone et cathode à base de $LiNiO_2$ dopé ou de $LiCoO_2$ ou de $LiMn_2O_4$ non dopé) est limité en termes d'énergie massique et volumique, à des valeurs allant de 160 à 200 Wh/kg et de 430 à 500 Wh/l.

Les applications électroniques, notamment de type «portables», requièrent de plus en plus d'énergie. Cette course à l'énergie est aujourd'hui principalement limitée par l'électrode négative à base de carbone (anode), qui a certes une longue durée de vie, mais une capacité limitée (environ 300-350 mAh/g réversible). L'énergie massique/volumique de l'accumulateur lithium-ion est également limitée par la tension moyenne de fonctionnement du matériau actif de l'électrode positive (cathode). La tension de fonctionnement moyenne en décharge du matériau actif est de 3,6V pour $LiNiO_2$ dopé, 3,7V pour $LiCoO_2$ et 3,8V pour $LiMn_2O_4$ non dopé. Cette limitation est principalement imposée par le niveau de sécurité de l'accumulateur Li-ion à l'état chargé.

La demande du marché pour des batteries de haute énergie pourrait donc être comblée par l'utilisation de nouvelles matières actives négatives plus capacitives telles que celles à base de Si-C, ou celles à base de composés intermétalliques, mais aussi par des matières actives positives fonctionnant à plus haute tension que 4 V. Un accroissement de 1 Volt de la tension de fonctionnement de l'électrode positive lithium-ion est susceptible d'induire, suivant la capacité atteinte (110-130 mAh/g) par l'électrode positive, un accroissement de l'énergie massique et/ou volumique de 10 à 15% de l'ensemble électrode positive, séparateur et électrode négative (« stack électrochimique »).

Des matières actives pour électrode positive de générateur lithium-ion, aptes à fonctionner à une tension supérieure à 4,5 V par rapport au couple Li$^+$/Li, sont connues de l'art antérieur. Elles sont appelées « matières actives 5V ».

Par exemple, la demande de brevet FR 2 831 993 décrit un matériau capable d'insérer réversiblement du lithium et pouvant être utilisé comme matière active positive d'un générateur électrochimique au lithium. Ce matériau peut fonctionner à une tension supérieure à 4,5 V par rapport au couple Li$^+$/Li. Ce matériau est un oxyde de manganèse lithié obtenu par substitution d'une fraction du manganèse par les éléments M et M' et sa structure cristallographique est de type spinelle c'est-à-dire que les ions oxygène forment un assemblage de type cubique compact à faces centrées, les cations occupant des sites octaédriques et tétraédriques de ces assemblages. Une structure cristallographique typique est celle de l'aluminate de magnésium $MgAl_2O_4$. (groupe d'espace Fd3m)

Ce matériau a pour formule :

$$LiMn_{2-x-y}M_xM'_yO_4$$

avec x > 0 ; y > 0 et x+y > 0,5 ;
M = Ni, Co ;
M'= Ti, Al, Co, Mo

Le degré d'oxydation du manganèse dans ce matériau est de IV. Tout le manganèse de ce matériau est au degré d'oxydation IV. La décharge de la quasi-totalité de la capacité électrochimique d'un tel matériau est obtenue pour un potentiel supérieur à 4,5V.

Un générateur électrochimique de type lithium-ion incorporant ce matériau positif a cependant l'inconvénient de présenter des performances médiocres en décharge sous courant fort (ou décharge rapide) et une faible durée de vie dans des conditions d'utilisation en cyclage.

L'article intitulé "Preparation and electrochemical properties of high-voltage cathode materials, LiMyNi0.5-yMn1.5O4 (M=Fe, Cu, Al, Mg ; y=0.0-0.4)" paru dans Journal of Power Sources 115, (2003), 332-345., décrit une spinelle de formule $LiMyNi_{0.5-y}Mn_{1,5}O_4$ dans laquelle M est choisi parmi Fe, Cu, Al et Mg et y est compris entre 0 et 0,4. Les résultats d'études de voltammétrie cyclique menées sur ces spinelles montrent une première zone d'activité électrochimique vers 4 volt et une seconde zone au dessus de 4,4V. L'activité électrochimique 4V est due au couple $Mn^{4+}/Mn^{3+}$, et l'activité «5V» est due aux réactions rédox du nickel et des autres ions de métaux de transition.

Le brevet US 6 337 158 décrit un accumulateur au lithium comprenant une matière active positive qui est un oxyde composite de manganèse et de lithium. Ce composite a la structure d'une spinelle. Il est représenté par la formule $Li_xMn_{2-y-z}Ni_yM_zO_4$, où M est au moins un élément choisi dans le groupe consistant en Fe, Co, Ti, V, Mg, Zn, Ga, Nb, Mo et Cu ; et $0,02 \leq x \leq 1,10$ ; $0,25 \leq y \leq 0,60$ et $0 < z \leq 1,10$. Il est dit que ce composite possède un potentiel de décharge par rapport au lithium de 4,5 V ou plus.

On recherche donc un générateur électrochimique lithium-ion :

- apte à fonctionner à une tension supérieure à 4,5 V,
- présentant de bonnes performances en décharge rapide (aptitude à la puissance),
- offrant une durée de vie en cyclage améliorée.

RESUME DE L'INVENTION

L'invention propose un composé pouvant être utilisé comme matière active d'une électrode positive d'un générateur lithium-ion. Ce composé présente une tension moyenne de décharge supérieure à 4,5V par rapport au couple $Li^+/Li$, environ 4,7V.

Ce composé comprend:

a) une phase cristalline de type spinelle de formule

$$Li_aNi^{II}_{0,5-x}Mn^{III}_{2x}Mn^{IV}_{1,5-x-y}M_yO_4$$

dans laquelle

M est choisi dans le groupe comprenant les éléments Ti et Al, ou un mélange de ceux-ci;
$0,8 < a < 1,3$ ;
$0 < x \leq 0,15$ ;
$0 < y \leq 0,15$ ;

b) une phase cristalline cubique de formule

$$Li_{1-t}Ni_{1+t}O$$

dans laquelle $0 \leq t \leq 1$ ; et

c) une phase cristalline rhomboédrique de formule

$$Li_{1-z}Ni_{1+z}O_2$$

dans laquelle $0 \leq z \leq 1$.

La courbe de tension en décharge du composé selon l'invention présente deux plateaux de décharge, l'un à 4V, l'autre à un potentiel supérieur à 4,5V.

Selon un mode de réalisation, $0 < x \leq 0,10$.

Selon un mode de réalisation, le pourcentage molaire de phase cristalline de type spinelle est de 75 à 98 %, de préférence de 85 à 96 %.

Selon un mode de réalisation, le pourcentage molaire de phase cristalline cubique est de 1 à 10 %, de préférence de 2 à 6 %.

Selon un mode de réalisation, le pourcentage molaire de phase cristalline rhomboédrique est de 0,5 à 15 %, de préférence de 1 à 10%.

Selon un mode de réalisation, a=1.

Selon un autre mode de réalisation,

$$0,01 \leq \frac{2x}{1,5-x-y} \leq 0,25$$

Selon un autre mode de réalisation,

$$0,05 \leq \frac{2x}{1,5-x-y} \leq 0,10 .$$

Selon un autre mode de réalisation, x = 0,07 et y < 0,09.

L'invention a encore pour objet l'utilisation d'un composé selon l'invention, pour la fabrication d'une électrode apte à fonctionner à un potentiel supérieur à 4,5 V par rapport au couple Li⁺/Li.

L'invention fournit encore une électrode positive pour générateur électrochimique au lithium comprenant une matière active comprenant le composé selon l'invention.

L'invention fournit encore un générateur électrochimique au lithium comprenant au moins une électrode positive selon l'invention.

Selon un mode de réalisation, dans le générateur selon l'invention, la courbe de tension de décharge présente un plateau à une tension supérieure ou égale à environ 4,5 V, et un plateau à une tension d'environ 4 V.

Ce composé est préparé par un procédé permettant la formation concomitante des trois phases a), b) et c) à partir d'un seul mélange réactionnel (« formation one pot »). Ce procédé comprend les étapes consistant à :

a) fournir un mélange de NiO, MnO$_2$ ou Mn$_3$O$_4$, et un oxyde de métal M; M étant choisi dans le groupe comprenant les éléments Ti et Al, ou un mélange de ceux-ci;
b) broyer le mélange,
c) chauffer le mélange à une température supérieure à 900°C,
d) ajouter au mélange un composé à base de lithium,
e) chauffer le mélange à une température comprise entre 700°C et 820°C.

Selon un mode de réalisation, la température de l'étape e) est comprise entre 730 et 800°C.

Selon un mode de réalisation, le composé à base de lithium est Li$_2$CO$_3$.

Selon un mode de réalisation, la quantité de nickel présente dans le mélange avant synthèse de la phase spinelle, correspond à un indice stoechiométrique du nickel allant de 0,47 à 0,52.

Selon un mode de réalisation, la quantité de nickel présente dans le mélange avant synthèse de la phase spinelle, correspond à un indice stoechiométrique du nickel allant de 0,49 à 0,51.

BREVE DESCRIPTION DES FIGURES

- Figure 1 : caractérisation électrochimique en piles boutons (versus Li) des spinelles des exemples 2, 3, 4 et 5 (1er cycle, régime lent de décharge: C/20).
- Figure 2 : caractérisation électrochimique en piles boutons (versus Li) des spinelles des exemples 2, 3, 4 et 5 (3ème cycle, régime lent de décharge: C/20).
- Figure 3 : caractérisation électrochimique en piles boutons (versus Li) des spinelles des exemples 2, 3, 4 et 5 (10ème cycle, régime rapide de décharge: C/5). Capacités respectives ramenées à 100%.
- Figure 4 : cyclage de longue durée (décharge en C/10, température ambiante) d'éléments 4/5 A de définitions électrochimiques :

- graphite /LiPF$_6$-EC-PC-3DMC/ spinelle de l'exemple 2
- graphite /LiPF$_6$-EC-PC-3DMC/ spinelle de l'exemple 4.
- Tests de puissance sur ces mêmes éléments à D/2 et D.

EXPOSE DETAILLE DE MODES DE REALISATION DE L'INVENTION

Le composé selon l'invention comprend trois phases cristallines.

La première phase est une phase cristalline de type spinelle de formule LiaNi$^{II}_{0,5-x}$Mn$^{III}_{2x}$Mn$^{IV}_{1,5-x-y}$M$_y$O$_4$ dans laquelle

M est choisi dans le groupe comprenant les éléments Ti et A1, ou un mélange de ceux-ci;
$0,8 < a < 1,3$ ;
$0 < x \le 0,15$ ;
$0 < y \le 0,15$ ;

Ni$^{II}$, Mn$^{III}$ et Mn$^{IV}$ désignent respectivement le nickel au degré d'oxydation 2, le manganèse au degré d'oxydation 3 et 4.

Selon un mode de réalisation, a=1 .

Selon un mode de réalisation, $0,01 \le \dfrac{2x}{1,5 - x - y} \le 0,25$

Selon un mode de réalisation, $0,05 \leq \dfrac{2x}{1,5 - x - y} \leq 0,10$ et de préférence x=0,07 et y<0,09.

Les réactions électrochimiques se produisant au cours de la charge de la spinelle selon l'invention sont les suivantes :

- Pour un potentiel inférieur à 4,5 V par rapport à Li, il se produit la transformation de $Mn^{III}$ en $Mn^{IV}$.
- Pour un potentiel supérieur à 4,5 V par rapport à Li, il se produit la transformation de $Ni^{II}$ en $Ni^{IV}$.

La courbe de charge de la spinelle selon l'invention comporte donc deux parties :

- un plateau à une tension inférieure à 4,5V vs. $Li^+/Li$, (environ 4V), relatif à la réaction : $Mn^{III} \rightarrow Mn^{IV}$ (plateau dit « 4V »),
- un plateau à une tension supérieure à 4,5V vs. $Li^+/Li$, (environ 4,7V), relatif à la réaction: $Ni^{II} \rightarrow Ni^{IV}$ (« plateau dit « 5V ») .

La longueur de chaque plateau est proportionnelle à la quantité de chaque espèce électrochimiquement active. La longueur de plateau 4V représente généralement de 1 à 15% de la capacité électrochimique totale de la spinelle. La longueur de plateau 5V représente généralement de 85 à 99% de la capacité électrochimique totale de la spinelle.

Il résulte de la présence de $Mn^{III}$ une valeur de tension légèrement abaissée par rapport au composé spinelle « 5V » de l'art antérieur, mais en revanche, cette tension de fonctionnement plus basse limite l'oxydation de l'électrolyte.

La présence d'un plateau à 4V a comme avantage de permettre un contrôle de l'état de charge de l'électrode positive.

La demanderesse a constaté que la présence de $Mn^{III}$ n'a pas pour effet d'augmenter la vitesse de dissolution du manganèse dans l'électrolyte. L'électrode positive conserve sa stabilité et une bonne durée de vie dans des conditions de cyclage. Il a par ailleurs été constaté que l'absence de $Mn^{III}$ dans un composé spinelle de type 5V conduit à un matériau peu conducteur et donc à des performances électrochimiques du générateur peu satisfaisantes : mauvaise aptitude à la décharge rapide et perte de capacité en cyclage.

La seconde phase du composé selon l'invention est une phase cristalline cubique de formule $Li_{1-t}Ni_{1+t}O$ dans laquelle

$0 \leq t \leq 1$.

La troisième phase du composé selon l'invention est une phase cristalline rhomboédrique de formule $Li_{1-z}Ni_{1+z}O_2$ dans laquelle $0 \leq z \leq 1$.

La seconde phase et la troisième phase sont dites phases adjointes.

Les phases adjointes ne sont pas des formes électrochimiquement actives. Contrairement aux phases lamellaires classiques de l'électrochimie lithium-ion telles que $LiCoO_2$ et $LiNiO_2$ dopé, les phases adjointes ne participent pas, à l'exception de la première charge, à l'augmentation de capacité électrique de l'électrode. Elles ont pour effet d'améliorer la conductivité électrique du composé sans interférer avec l'électrochimie de la phase spinelle.

Au contraire, les phases lamellaires classiques de l'électrochimie lithium-ion telles que $LiCoO_2$ et $LiNiO_2$ dopé sont électrochimiquement actives et se détériorent à haut potentiel (4,9 V par rapport à $Li^+/Li$).

Les trois phases cristallines du composé selon l'invention sont obtenues par un procédé permettant de les fabriquer simultanément, à partir d'un seul mélange réactionnel. Ce procédé est donc un procédé dit « one pot ».

Le procédé de préparation du composé de l'invention comprend les étapes suivantes :

a) on fournit un mélange de NiO, $MnO_2$ ou $Mn_3O_4$, et un oxyde de métal M; M étant choisi dans le groupe comprenant les éléments Ti et Al, ou un mélange de ceux-ci. On peut par exemple utiliser $TiO_2$ et/ou $Al_2O_3$.
b) on broie et éventuellement on tamise le mélange,
c) on chauffe le mélange à une température supérieure à 900°C, de préférence à 950°C. Le chauffage permet de synthétiser un promoteur de la spinelle.
d) on ajoute au mélange un composé à base de lithium, tel que le carbonate de lithium $Li_2CO_3$.
e) on chauffe le mélange à une température comprise entre 700°C et 820°C afin de réaliser la lithiation du promoteur.

Selon un mode de réalisation, la quantité de nickel présente dans le mélange avant synthèse de la phase spinelle, correspond à un indice stoechiométrique du nickel allant de 0,47 à 0,52, de préférence de 0,49 à 0,51.

Une température de chauffage comprise entre 700°C et 820°C à l'étape e) est choisie de préférence pour l'obtention du composé selon l'invention. En effet, un chauffage à une température comprise entre 700°C et 820°C, de préférence entre 730°C et 800°C, permet d'une part la formation de la phase spinelle a) déficitaire en nickel et riche en manganèse III et d'autre part la formation concomitante des phases adjointes b) $Li_{1-t}Ni_{1+t}O$ et c) $Li_{1-z}Ni_{1+z}O_2$.

Au cours du chauffage, il se produit une migration d'une fraction x de la quantité de nickel initialement présente dans le mélange, depuis la phase spinelle vers les phases adjointes b) $Li_{1-t}Ni_{1+t}O$ et c) $Li_{1-z}Ni_{1+z}O_2$. Ceci explique le déficit en nickel dans la phase spinelle a) du composé selon l'invention. Ce déficit est représenté par la valeur de l'indice stoechiométrique 0,5-x du nickel, qui est inférieure strictement à 0,5.

On a constaté que la proportion de manganèse III dans la phase spinelle était proportionnelle à la température de chauffage de l'étape e). Toutefois, un chauffage au-delà de 830°C ou plus provoque plus ou moins la dégradation de la structure de la phase spinelle.

Le pourcentage de $Mn^{III}$ représente généralement de 1 à 15 % du $Mn^{IV}$.

A titre d'exemples :

- pour une synthèse réalisée à 750°C : le ratio $Mn^{III}/Mn^{IV}$ est égal à 0,10 (x = 0,07).
- pour une synthèse réalisée à 800°C : le ratio $Mn^{III}/Mn^{IV}$ est égal à 0,15 (x = 0,10).

Selon un mode de réalisation, l'invention ne concerne pas un mode de préparation d'un composé de type spinelle dans lequel les phases adjointes seraient mélangées à la phase spinelle après obtention de celle-ci, c'est-à-dire un ajout ex-situ des phases adjointes.

Les exemples ci-après montrent que l'addition ex-situ des phases adjointes donne de moins bons résultats que dans le cas de leur formation in-situ.

La Demanderesse a constaté que la présence de $Mn^{III}$ augmentait la conductivité électrique intrinsèque du composé et induisait le comportement électrochimique en deux plateaux tel que décrit ci-avant.

La longueur du plateau du composé comprend donc deux parties. Une première partie à environ 4V représentant de 1 à 15% de la capacité électrochimique totale. Une seconde partie à environ 4,7V représentant de 85 à 99% de la capacité électrochimique totale.

Le taux de $Mn^{III}$ peut être évalué par dosage oxydoréduction par le sel de Mohr $Fe(NH_4)_2(SO_4)_2$ en milieu acide fort. Une prise d'essai de spinelle de masse connue est placée dans un erlenmeyer. Un volume connu d'une solution titrée de sel de Mohr et de l'acide sulfurique 6 N sont ajoutés. On fait barboter dans l'erlenmeyer bouché un courant d'azote. On chauffe le mélange jusqu'à sa dissolution totale. Au cours de la réaction d'oxydo-réduction, il se produit la réduction des espèces $Mn^{IV}$ et $Mn^{III}$ en $Mn^{II}$ et l'oxydation du $Fe^{II}$ en $Fer^{III}$. Après refroidissement du mélange, on dose par une solution titrée de dichromate de potassium $K_2Cr_2O_7$, l'excès de sel de Mohr n'ayant pas réagi.

La détection des phases $Li_{1-t}Ni_{1+t}O$ cubique et $Li_{1-z}Ni_{1+z}O_2$ rhomboédrique est possible par diffraction des rayons X. Ces phases $Li_{1-t}Ni_{1+t}O$ cubique et $Li_{1-z}Ni_{1+z}O_2$ rhomboédrique sont facilement différenciables de NiO ou de $LiNiO_2$ dopé ou de $LiCoO_2$ par la position des raies en 2θ et par affinement Rietveld du profil de diffraction X.

La phase spinelle obtenue par ce procédé présente une conductivité électrique intrinsèque améliorée. L'association de la phase spinelle riche en $Mn^{III}$ avec les phases adjointes permet d'obtenir un composé électrochimiquement actif pouvant être utilisé pour la fabrication d'une électrode apte à fonctionner à un potentiel supérieur à 4,5V par rapport à $Li^+/Li$. Lorsque le composé est utilisé comme matière active d'une électrode positive d'un générateur au lithium, la perte de capacité de ce générateur au cours du cyclage est moindre.

L'invention a aussi pour objet une électrode positive de générateur électrochimique rechargeable au lithium contenant comme matière électrochimiquement active, le composé tel que décrit précédemment. Ce composé possède la propriété d'insérer réversiblement du lithium.

L'électrode est généralement constituée d'un support conducteur servant de collecteur de courant et d'au moins une couche contenant la matière active. Cette couche est réalisée par dépôt sur le support d'une pâte contenant la matière électrochimiquement active, un liant polymère, un diluant et éventuellement des additifs conducteurs.

Le liant peut contenir un ou plusieurs des composants suivants : le polyfluorure de vinylidène (PVdF) et ses copolymères, le polytétrafluoroéthylène (PTFE), le polyacrylonitrile, le polyméthacrylate de méthyle ou de butyle, le polychlorure de vinyle, le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.

Le procédé de fabrication d'une électrode contenant le composé décrit précédemment comprend les étapes suivantes. On met le liant sous forme de solution ou de suspension dans un solvant. Pour former une pâte, on ajoute à la solution ou suspension la matière active pulvérulente et éventuellement des auxiliaires de fabrication comme par exemple un épaississant. On ajuste la viscosité de la pâte et on recouvre de pâte au moins une face d'un collecteur de courant pour former une couche active. On sèche et on calandre le collecteur recouvert de ladite couche active pour former l'électrode.

Le collecteur de courant est de préférence un support conducteur bidimensionnel, comme un feuillard plein ou perforé, à base de carbone ou de métal, par exemple en cuivre, aluminium, nickel, acier, inox ou aluminium. De préférence, le collecteur de l'électrode positive est en aluminium et le collecteur de l'électrode négative est en cuivre ou en aluminium. Avantageusement, le collecteur négatif est en aluminium. En cas de surdécharge ou d'inversion de l'accumulateur, on évite ainsi la mise en court-circuit par dendrites de cuivre lorsque le collecteur est en cuivre.

La présente invention se rapporte également à un générateur électrochimique rechargeable au lithium dont les énergies massique et volumique sont améliorées par l'utilisation d'une matière active cathodique de tension de décharge élevée.

Le générateur selon l'invention, présente une courbe de tension de décharge avec un plateau à une tension supérieure ou égale à environ 4,5 V, et un plateau à une tension d'environ 4 V.

L'électrode négative (anode) est un composé d'insertion du lithium choisi parmi un matériau carboné et un oxyde mixte de lithium et d'un métal de transition. La matière active anodique peut être choisie parmi un matériau carboné comme le graphite, le coke, le noir de carbone et le carbone vitreux et un oxyde mixte de lithium et d'un métal de transition comme le nickel, le cobalt ou le titane. Elle peut également être un composite Si-C, Sn-C ou un composé intermétallique.

L'électrode positive, et l'électrode négative, ou anode lors de la décharge, encadrent un séparateur et sont imprégnées d'électrolyte.

L'électrolyte est un électrolyte classique dans l'art des générateurs lithium-ion. Il peut être constitué par une solution d'un sel conducteur de lithium dissous dans un solvant non aqueux. Ce solvant peut être un solvant ou un mélange de solvants choisi parmi les solvants organiques usuels notamment les carbonates cycliques saturés, les carbonates cycliques insaturés, les carbonates non-cycliques, les esters d'alkyle.

Le sel conducteur de lithium peut être le perchlorate de lithium $LiClO_4$, le lithium bis oxalatoborate LiBOB, l'hexafluoroarsénate de lithium $LiAsF_6$, l'hexafluorophosphate de lithium $LiPF_6$, le tétrafluoroborate de lithium $LiBF_4$, le trifluorométhanesulfonate de lithium $LiCF_3SO_3$, le trifluorométhanesulfonimide de lithium $LiN(CF_3SO_2)_2$ (LiTFSI), le trifluorométhanesulfoneméthide de lithium $LiC(CF_3SO_2)_3$ (LiTFSM) ou le bisperfluoroéthylsulfonimide de lithium $LiN(C_2F_5SO_2)_2$ (BETI).

Le composé selon l'invention peut également être utilisé dans l'électrode positive d'un générateur électrochimique de type lithium polymère.

Le générateur électrochimique selon l'invention est particulièrement bien adapté comme source d'énergie pour les applications portables, spatiales, aéronautiques, les télécommunications, l'alimentation des véhicules électriques et hybrides, les applications industrielles ou l'éclairage de secours.

Les exemples suivants illustrent l'invention sans la limiter.

EXEMPLES

A) Exemples de préparation de spinelles 5V

Les caractéristiques physico-chimiques et électrochimiques des composés obtenus dans les exemples 1 à 5 suivants figurent dans le Tableau 1.

Exemple 1 selon l'art antérieur:

Le composé spinelle de l'exemple 1 a été synthétisé en fabriquant d'abord à 950°C un précurseur à partir de 0,77 mole de NiO et 0,747 mole de $Mn_3O_4$, soit 2,23 mole de Mn.

La lithiation du précurseur a ensuite été réalisée à 700°C avec $Li_2CO_3$.

Le composé spinelle ne contient pas de titane.

Le pourcentage de manganèse au degré d'oxydation IV par rapport au total de manganèse est de 100%.

Exemple 2 selon l'art antérieur :

Le composé spinelle de l'exemple 2 a été synthétisé en fabriquant d'abord à 950°C un précurseur à partir de 0,75 mole de NiO, 2,15 mole de $MnO_2$ et 0,1 mole de $TiO_2$. Le précurseur obtenu est $Ni_{0,75}Mn_{2,15}Ti_{0,1}O_4$.

Une lithiation a ensuite été réalisée à 700°C avec $Li_2CO_3$. A 700°C, il se forme le composé $LiNi^{II}_{0,50}Mn^{IV}_{1,42}Ti^{IV}_{0,08}O_4$. L'indice stoechiométrique du nickel dans le composé spinelle obtenu est égal à 0,50.

Le composé spinelle synthétisé contient du titane dont l'indice fraction stoechiométrique est de 0,08.

Le pourcentage de manganèse au degré d'oxydation IV par rapport au total de manganèse est de 100%.

On peut noter la disparition de la phase NiO présente dans l'exemple 1, le titane favorisant l'incorporation du nickel dans la phase spinelle à 700°C.

Exemple 3 selon l'invention :

Le composé spinelle de l'exemple 3 a été synthétisé en fabriquant d'abord à 950°C un précurseur à partir de 0,75 mole de NiO, 2,15 mole de $MnO_2$ et 0,10 mole de $TiO_2$. Le précurseur formé est $Ni_{0,75}Mn_{2,15}Ti_{0,1}O_4$.

La lithiation est ensuite réalisée à 750°C avec $Li_2CO_3$ pour former la spinelle de formule $LiNi^{II}_{0,43}Mn^{III}_{0,14}Mn^{IV}_{1,35}Ti^{IV}_{0,08}O_4$. On constate que lorsque la température de lithiation est supérieure à 700°C, la phase spinelle s'appauvrit en nickel (indice du nickel de 0,43 au lieu de 0,5 dans l'exemple 2) et s'enrichit en $Mn^{III}$.

Le ratio $Mn^{III}/Mn^{IV}$ est de 0,10. Le nickel ressort de la spinelle mais pour former des phases lithiées (système Li-Ni-O).

Exemple 4 selon l'invention :

Les composés de départ sont les mêmes que pour l'exemple 3 mais la lithiation a été réalisée à 800°C au lieu de 750°C.

Le composé spinelle obtenu contient du titane dont la fraction stoechiométrique est de 0,08

Le ratio $Mn^{III}/Mn^{IV}$ est de 0,15. Un accroissement supplémentaire de la température fait sortir encore plus de nickel de la phase spinelle (indice stoechiométrique du nickel de 0,4 au lieu de 0,43 dans l'example 3) et accroît la quantité de $Mn^{III}$ dans la spinelle.

Exemple 5 hors de l'invention:

Le composé de l'exemple 2 est mélangé avec 5% de phase adjointe $LiNiO_2$ dopée par Co-Mn pour vérifier l'effet d'une telle addition ex-situ lors de la fabrication de l'électrode et non in-situ lors de la synthèse de la spinelle.

**Tableau** I

| Caractéristiques | Exemple 1 | Exemple 2 | Exemple 3 | Exemple 4 | Exemple 5 |
|---|---|---|---|---|---|
| **Température de synthèse** | **700°C** | **700°C** | **750°C** | **800°C** | **Exemple 2 + 5% LiNiO$_2$ (rhomboédrique) (NMC)** |
| | | | | | |
| **Affinement structural** | | | | | |
| Formule de la spinelle | $\text{LiNi}^{II}_{0.50}\text{Mn}^{IV}_{1.50}\text{O}_4$ | $\text{LiNi}^{II}_{0.50}\text{Mn}^{IV}_{1.42}\text{Ti}^{IV}_{0.08}\text{O}_4$ | $\text{LiNi}^{II}_{0.43}\text{Mn}^{III}_{0.14}\text{Mn}^{IV}_{1.35}\text{Ti}^{IV}_{0.08}\text{O}_4$ | $\text{LiNi}^{II}_{0.40}\text{Mn}^{III}_{0.20}\text{Mn}^{IV}_{1.32}\text{Ti}^{IV}_{0.80}\text{O}_4$ | |
| $\text{Mn}^{III}/\text{Mn}^{IV}$ | ε | ε | 0.10 | 0.15 | |
| Spinelle (%) | 96.8 | 97.9 | 94.3 | 88.2 | |
| NiO | 0.3 | - | - | - | |
| $\text{Li}_{1-t}\text{ni}_{1+t}\text{O}$ cubique | 2.7 | 1.5 | 3.8 | 3.4 | |
| $\text{Li}_{1-z}\text{ni}_{1+z}\text{O}_2$ rhomboédrique | 0.2 | 0.6 | 19 | 8.4 | |
| | | | | | |
| **Electrochimie vs Li** | | | | | |
| Capacité rever. (mAh/g) | 133 | 134 | 129 | 124 | 120 |
| Capacité irrév. (mAh/g) | 11 | 10 | 16 | 13 | 22 |
| Perte capacité (%-cycle) | 0.10 | 0.34 | 0.08 | 0.10 | 0.22 |
| % capacity C/10 vs C/20 | 97.8% | 97.2% | 98.9% | 98.9% | 96.9% |
| %capacity C/5 vs C/20 | 92.1% | 91.4% | 979% | 959% | 916% |

(suite)

| Caractéristiques | Exemple 1 | Exemple 2 | Exemple 3 | Exemple 4 | Exemple 5 |
|---|---|---|---|---|---|
| | | | | | |
| **Electrochimie / graphite** | | | | | |
| Mn (ppm) après 4 cycles | 360 | 460 | 90 | 80 | 100 |

B) Caractérisation électrochimique des composés préparés:

Les composés spinelle « 5V » synthétisés ont été utilisés comme cathodes de générateurs de type Li-ion. Des caractérisations en pile-boutons [Li métal // spinelle « 5V »] ont été réalisées, ainsi que des caractérisations en accumulateurs complets (4/5A), face à des matériaux négatifs du type graphite.

Les électrodes positives fabriquées à partir des matériaux spinelle « 5V » comprennent :

- 86% spinelle « 5V »
- 4% Y50A (suie)
- 4% UF2 (graphite) et
- 6% PVDF

Les sels utilisés sont $LiPF_6$ et LiBOB. Le solvant est un mélange de carbonates choisis parmi le carbonate d'éthylène (EC), le carbonate de propylène (PC), le carbonate de diméthyle (DMC), le carbonate de diéthyle (DEC), le carbonate de vinylidène (VC).

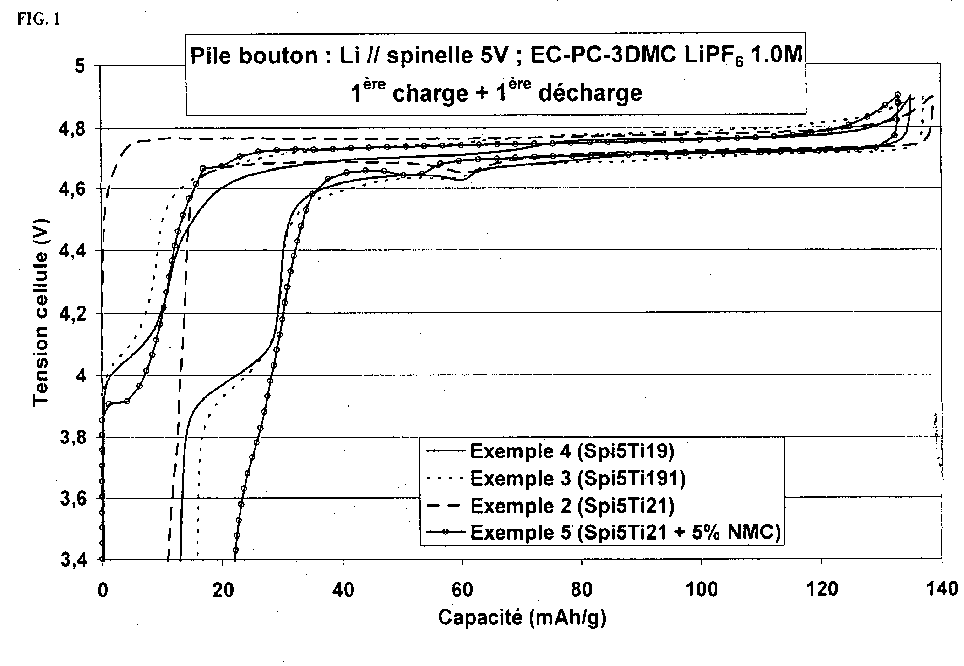

Les résultats des tests de caractérisation des pile-boutons [Li métal // spinelle « 5V »] sont représentés Figures 1; 2 et 3.

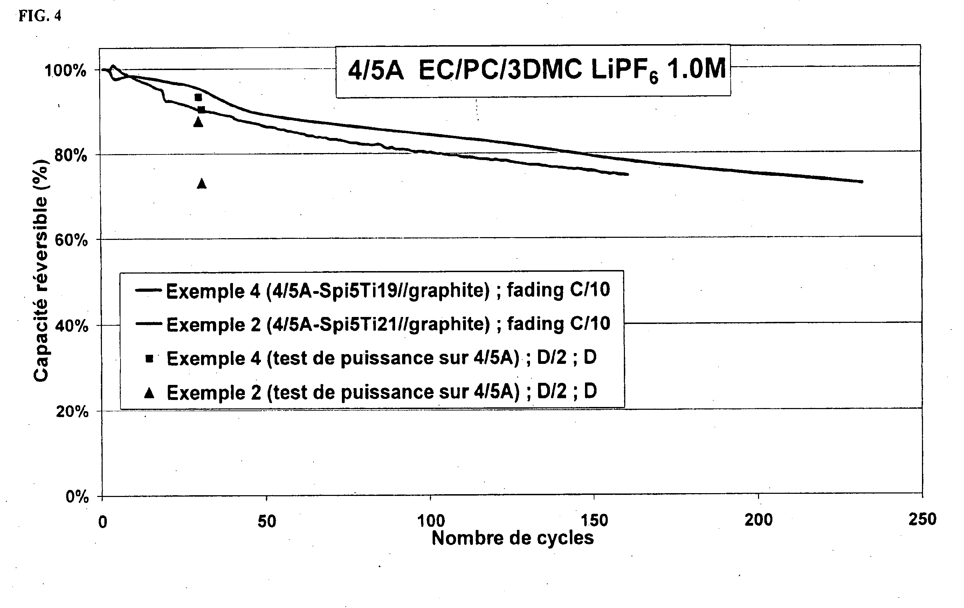

Les générateurs complets de type 4/5A ont été soumis à un test de cyclage de longue durée afin d'estimer leur durée de vie. Ce test comprend des décharges lentes au régime de C/10. Au 30ème cycle, un test de décharge rapide aux régimes de D/2 et D a été effectué. Les résultats des tests de caractérisation de ces générateurs complets (4/5A) sont représentés Figure 4 et Tableau 2.

C) Résultats

1) Caractérisation des électrodes

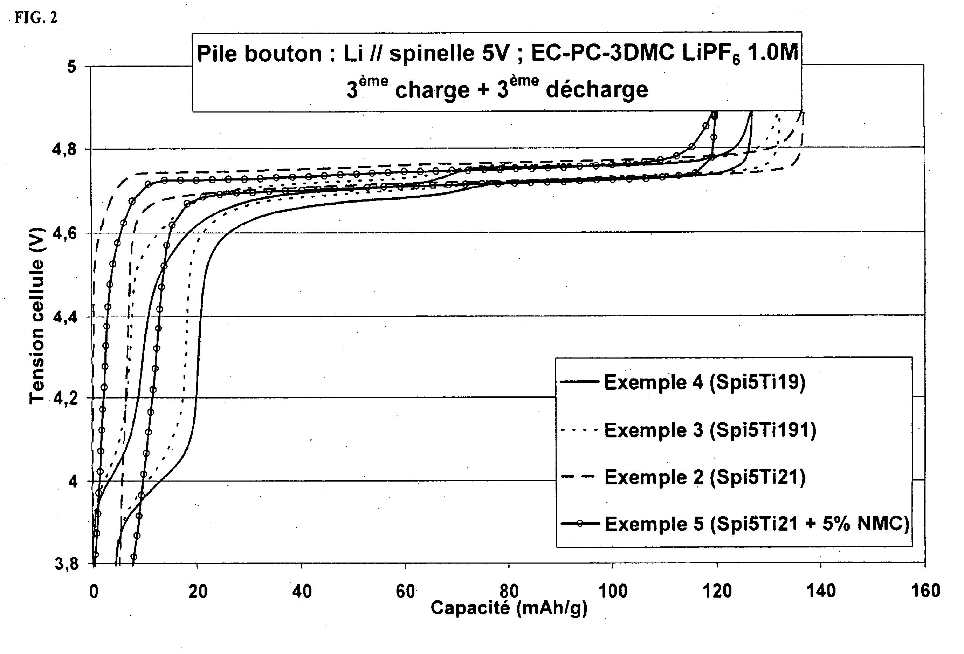

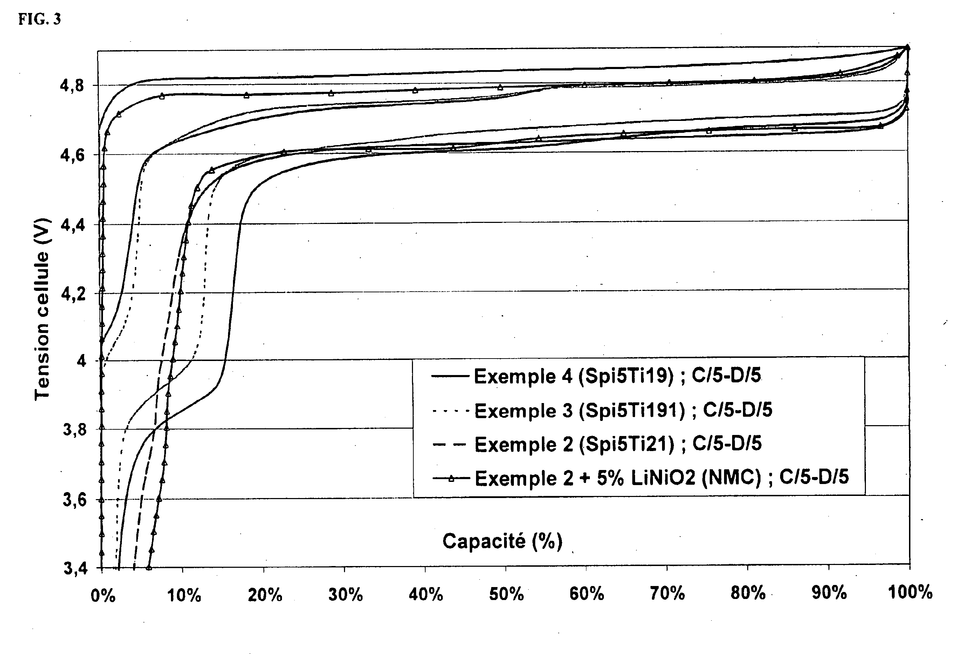

Les caractéristiques en cyclage d'électrodes comprenant les composés des exemples 2 à 5 (versus Li) sont reportées sur la Figure 1 (décharge en C/20, 1er cycle), sur la Figure 2 (décharge en C/20, 3ème cycle) et sur la Figure 3 (décharge en C/5).

Le Tableau 1 compare les rapports entre la capacité déchargée au régime de décharge de C/10 et la capacité déchargée au régime de C/20 pour les exemples 1-5. Il compare également les rapports entre la capacité déchargée au régime de décharge de C/5 et la capacité déchargée au régime de C/20.

La capacité déchargée au régime de décharge de C/10 est supérieure pour les exemples 3 et 4 selon l'invention à celle des exemples 1, 2 et 5 hors invention. La différence de performances entre les exemples 3 et 4 et les exemples 1, 2 et 5 est encore plus significative pour une décharge plus rapide en C/5. En effet, les capacités restituées pour une décharge en C/5 sont respectivement de 97,9% et 95,9% pour les exemples 3 et 4, alors qu'elles ne sont respectivement que de 92,1%, 91,4% et 91,6% pour les exemples 1, 2 et 5.

Le Tableau 1 indique également la teneur en manganèse mesurée après cyclage des composés pendant 4 cycles. La teneur en manganèse mesurée dans l'électrolyte est représentative de la stabilité du composé en cyclage. Une teneur élevée en manganèse indique une faible stabilité du composé.

Les composés des exemples 1 et 2 contiennent une phase cristalline cubique $Li_{1-t}Ni_{1+t}O$ et une phase cristalline rhomboédrique $Li_{1-z}Ni_{1+z}O_2$ mais ne contiennent pas de $Mn^{III}$. La teneur en Manganèse mesurée est de 360 et 460 ppm respectivement ; ce qui est élevé en comparaison avec les exemples 3 et 4.

Les composés des exemples 3 et 4 contiennent du $Mn^{III}$, une phase cristalline cubique $Li_{1-t}Ni_{1+t}O$ et une phase cristalline rhomboédrique $Li_{1-z}Ni_{1+z}O_2$. La teneur en manganèse mesurée est de 90 et 80 ppm respectivement, soit environ 4 fois plus faible que les exemples 1 et 2. La présence de $Mn^{III}$, mais aussi de phases adjointes $Li_{1-t}Ni_{1+t}O$ cubique et/ou $Li_{1-z}Ni_{1+z}O_2$ rhomboédrique réduit la perte de capacité en cyclage en donc améliore la durée de vie en cyclage. La présence de $Mn^{III}$ et de phases adjointes engendre une baisse légère de la capacité réversible.

Les courbes de charge/décharge des exemples 3 et 4 selon l'invention indiquent la présence de deux plateaux, l'un à environ 4V et l'autre à 4,7V.

L'addition de 5% de phase $LiNiO_2$ à la spinelle de l'exemple 2 améliore la conductivité électronique au premier cycle (Figure 1), mais pas suffisamment pour assurer à l'électrode une bonne conductivité à régime de charge/décharge rapide (C/5, Figure 3). Par ailleurs, la destruction de la phase $LiNiO_2$ ($Li_{1-z}Ni_{1+z}O_2$ pour z=1) à tension élevée (4,9V) induit un accroissement notable de l'irréversibilité du premier cycle électrochimique, avec une perte totale de l'activité à « 4V » intrinsèque à la phase $LiNiO_2$ ($Li_{1-z}Ni_{1+z}O_2$ pour z=1). En effet, le plateau « 4V » observé en charge ne se retrouve pas en décharge, contrairement aux spinelles des exemples 3 et 4, où le plateau « 4V » relatif à la réaction $Mn^{III} \leftrightarrow Mn^{IV}$ se retrouve en charge comme en décharge (Figure 2). Par voie de conséquence, la capacité réversible observée est plus faible (120 mAh/g).

L'effet de l'addition de phases adjointes ex-situ ne donne pas des performances aussi bonnes que dans l'invention où les phases adjointes sont fabriquées in-situ.

## 2) Durée de vie des générateurs

Le générateur 4/5A comprenant la matière active de l'exemple 2, hors invention, peut être cyclé pendant environ 100 cycles. La perte de capacité est de 20% après ces 100 cycles.

Le générateur 4/5A comprenant la matière active de l'exemple 4, selon l'invention, peut être cyclé pendant environ 150 cycles pour la même perte de capacité, ce qui représente un gain en durée de vie de 50%.

Le Tableau 2 compare les capacités de ces deux générateurs 4/5A au cours d'un test de décharge rapide aux régimes de D/2 et D. La perte de capacité en cyclage est plus importante pour le générateur comprenant la matière active de l'exemple 2 que pour le générateur de l'exemple 4.

La durée de vie en cyclage et l'aptitude à la décharge rapide des générateurs selon l'invention est donc améliorée.

Tableau 2.a: graphite/LiPF$_6$-EC-PC-3DMC/spinelle de l'ex. 2

| 4/5A : graphite / spinelle de l'exemple 2 | | |
|---|---|---|
| | Q/g (mAh/g) | Q / Q $_{C/10}$ |
| C/10 | 118 | 100 % |
| D/2 | 114 | 97 % |
| D | 96 | 81 % |

Tableau 2.b: graphite/LiPF$_6$-EC-PC-3DMC/spinelle de l'ex. 4

| 4/5A : graphite / spinelle de l'exemple 4 | | |
|---|---|---|
| | Q/g (mAh/g) | Q / Q C/10 |
| C/10 | 119 | 100 % |
| D/2 | 117 | 98 % |
| D | 113 | 95 % |

## Revendications

1. Composé comprenant :

   a) une phase cristalline de type spinelle de formule
   Li$_a$Ni$^{II}_{0,5-x}$Mn$^{III}_{2x}$Mn$^{IV}_{1,5-x-y}$M$_y$O$_4$ dans laquelle
   M est choisi dans le groupe comprenant les éléments Ti et Al, ou un mélange de ceux-ci;

   $0,8 < a < 1,3$ ;
   $0 < x \leq 0,15$ ;
   $0 < y \leq 0,15$ ;

   b) une phase cristalline cubique de formule Li$_{1-t}$Ni$_{1+t}$O dans laquelle $0 \leq t \leq 1$ ; et
   c) une phase cristalline rhomboédrique de formule Li$_{1-z}$Ni$_{1+z}$O$_2$ dans laquelle $0 \leq z < 1$.

2. Composé selon la revendication 1, dans lequel $0 < x \leq 0,10$.

3. Composé selon la revendication 1 ou 2, dans lequel le pourcentage molaire de phase cristalline de type spinelle est de 75 à 98 %, de préférence de 85 à 96 %.

4. Composé selon l'une des revendications précédentes, dans lequel le pourcentage molaire de phase cristalline cubique est de 1 à 10 %, de préférence de 2 à 6 %.

**5.** Composé selon l'une des revendications précédentes, dans lequel le pourcentage molaire de phase cristalline rhomboédrique est de 0,5 à 15 %, de préférence de 1 à 10%.

**6.** Composé selon l'une des revendications précédentes, dans lequel a=1.

**7.** Composé selon l'une des revendications précédentes, dans lequel $0,01 \leqslant \dfrac{2x}{1,5 - x - y} \leqslant 0,25$

**8.** Composé selon la revendication 7, dans lequel $0,05 \leqslant \dfrac{2x}{1,5 - x - y} \leqslant 0,10$.

**9.** Composé selon la revendication 8, dans lequel x = 0,07 et y < 0,09.

**10.** Utilisation d'un composé selon l'une des revendications 1 à 9, pour la fabrication d'une électrode apte à fonctionner à un potentiel supérieur à 4,5 V par rapport au couple $Li^+/Li$.

**11.** Electrode positive pour générateur électrochimique au lithium comprenant une matière active comprenant le composé selon l'une des revendications 1 à 9.

**12.** Générateur électrochimique au lithium comprenant au moins une électrode positive selon la revendication 11.

**13.** Générateur selon la revendication 12, dont la courbe de tension de décharge présente un plateau à une tension supérieure ou égale à environ 4,5 V, et un plateau à une tension d'environ 4 V.

**14.** Procédé pour la préparation d'un composé selon les revendications 1 à 9 comprenant les étapes consistant à :

a) fournir un mélange de NiO, $MnO_2$ ou $Mn_3O_4$, et un oxyde de métal M; M étant choisi dans le groupe comprenant les éléments Ti et Al, ou un mélange de ceux-ci;
b) broyer le mélange,
c) chauffer le mélange à une température supérieure à 900°C,
d) ajouter au mélange un composé à base de lithium,
e) chauffer le mélange à une température comprise entre 700°C et 820°C.

**15.** Procédé selon la revendication 14 dans lequel la température de l'étape e) est comprise entre 730 et 800°C.

**16.** Procédé selon l'une des revendications 14 à 15, dans lequel le composé à base de lithium est $Li_2CO_3$.

**17.** Procédé selon l'une des revendications 14 à 16, dans lequel la quantité de nickel présente dans le mélange avant synthèse de la phase spinelle, correspond à un indice stoechiométrique du nickel allant de 0,47 à 0,52.

**18.** Procédé selon la revendication 17, dans lequel la quantité de nickel présente dans le mélange avant synthèse de la phase spinelle, correspond à un indice stoechiométrique du nickel allant de 0,49 à 0,51.

**Claims**

**1.** A compound comprising:

a) a spinel-type crystalline phase of formula
$Li_aNi^{II}_{0,5-x}Mn^{III}_{2x}Mn^{IV}_{1,5-x-y}M_yO_4$ in which
M is chosen from the group comprising the elements Ti and Al, or a mixture of these;
0.8 < a < 1.3;
$0 < x \leq 0.15$;
$0 < y \leq 0.15$;
b) a cubic crystalline phase of formula
$Li_{1-t}Ni_{1+t}O$ in which $0 \leq t \leq 1$; and
c) a rhomboedric crystalline phase of formula
$Li_{1-z}Ni_{1+z}O_2$ in which $0 \leq z \leq 1$.

**2.** Compound according to claim 1, in which $0 < x \leq 0.10$.

**3.** Compound according to claim 1 or 2, in which the molar percentage of the spinel-type crystalline phase is 75 to 98%, preferably 85 to 96%.

**4.** Compound according to any one of the preceding claims, in which the molar percentage of the cubic crystalline phase is 1 to 10%, preferably 2 to 6%.

**5.** Compound according to any one of the preceding claims, in which the molar percentage of the rhomboedric crystalline phase is 0.5 to 15%, preferably 1 to 10%.

**6.** Compound according to any one of the preceding claims, in which a=1.

**7.** Compound according to any one of the preceding claims, in which $0.01 \leq \dfrac{2x}{1.5 - x - y} \leq 0.25$.

**8.** Compound according to claim 7, in which $0.05 \leq \dfrac{2x}{1.5 - x - y} \leq 0.10$.

**9.** Compound according to claim 8, in which $x = 0.07$ and $y < 0.09$.

**10.** Use of a compound according to any one of the preceding claims 1 to 9, for the production of an electrode suitable for operating at a potential greater than 4.5 V in relation to the $Li^+/Li$ couple.

**11.** Positive electrode for a lithium electrochemical cell comprising an active material comprising the compound according to any one of claims 1 to 9.

**12.** Lithium electrochemical cell comprising at least one positive electrode according to claim 11.

**13.** Cell according to claim 12, the discharge voltage curve of which has a plateau at a voltage greater than or equal to approximately 4.5 V, and a plateau at a voltage of approximately 4 V.

**14.** Process for the preparation of a compound according to claims 1 to 9, comprising the steps consisting of:

a) providing a mixture of NiO, $MnO_2$ or $Mn_3O_4$, and an oxide of metal M; M being chosen from the group comprising the elements Ti and Al, or a mixture of these;
b) grinding the mixture,
c) heating the mixture to a temperature above 900°C,
d) adding a lithium-based compound to the mixture,
e) heating the mixture to a temperature comprised between 700°C and 820°C.

**15.** Process according to claim 14, in which the temperature of step e) is comprised between 730 and 800°C.

**16.** Process according to one of claims 14 to 15, in which the lithium-based compound is $Li_2CO_3$.

**17.** Process according to one of claims 14 to 16, wherein the amount of nickel present in the mixture before synthesis of the spinel phase corresponds to a stoechiometric index of nickel from 0.47 to 0.52.

**18.** Process according to claim 17, wherein the amount of nickel present in the mixture before synthesis of the spinel phase corresponds to a stoechiometric index of nickel ranging from 0.49 to 0.51.

**Patentansprüche**

**1.** Verbindung, umfassend:

a) eine Kristallphase des Spinelltyps der Formel $Li_aNi^{II}_{0,5-x}Mn^{III}_{2x}Mn^{IV}_{1,5-x-y}M_yO_4$, in welcher M aus der Gruppe gewählt ist, welche die Elemente Ti und Al oder eine Mischung derselben umfasst;

0,8 < a < 1,3;
0 < x ≤ 0, 15;
0 < y ≤ 0,15;

b) eine kubische Kristallphase der Formel $Li_{1-t}Ni_{1+t}O$ in welcher $0 \leq t \leq 1$; und
c) eine rhomboedrische Kristallphase der Formel $Li_{1-z}Ni_{1+z}O_2$ in welcher $0 \leq z \leq 1$.

2. Verbindung nach Anspruch 1, wobei $0 < x \leq 0,10$.

3. Verbindung nach Anspruch 1 oder 2, wobei der molare Prozentanteil der Kristallphase des Spinelltyps 75 bis 98 %, vorzugsweise 85 bis 96 %, beträgt.

4. Verbindung nach einem der vorhergehenden Ansprüche, wobei der molare Prozentanteil der kubischen Kristallphase 1 bis 10 %, vorzugsweise 2 bis 6 %, beträgt.

5. Verbindung nach einem der vorhergehenden Ansprüche, wobei der molare Prozentanteil der rhomboedrischen Kristallphase 0,5 bis 15 %, vorzugsweise 1 bis 10 %, beträgt.

6. Verbindung nach einem der vorhergehenden Ansprüche, wobei a = 1 ist.

7. Verbindung nach einem der vorhergehenden Ansprüche, wobei $0,01 \leq \dfrac{2x}{1,5 - x - y} \leq 0,25$ ist.

8. Verbindung nach Anspruch 7, wobei $0,05 \leq \dfrac{2x}{1,5 - x - y} \leq 0,10$ ist.

9. Verbindung nach Anspruch 8, wobei
x = 0,07 und y < 0,09 ist.

10. Verwendung einer Verbindung nach einem der Ansprüche 1 bis 9 zur Herstellung einer Elektrode, die dazu geeignet ist, mit einem Potenzial von mehr als 4,5 V, bezogen auf das Paar $Li^+/Li$, betrieben zu werden.

11. Positive Elektrode für elektrochemische Lithium-Stromerzeuger, umfassend einen aktiven Stoff umfassend die Verbindung nach einem der Ansprüche 1 bis 9.

12. Elektrochemischer Lithium-Stromerzeuger, umfassend mindestens eine positive Elektrode nach Anspruch 11.

13. Stromerzeuger nach Anspruch 12, dessen Entladungsspannungskurve ein Plateau bei einer Spannung von mindestens ungefähr 4,5 V und ein Plateau bei einer Spannung von ungefähr 4 V aufweist.

14. Verfahren zur Herstellung einer Verbindung nach den Ansprüchen 1 bis 9, umfassend die Schritte, welche darin bestehen:

a) eine Mischung aus NiO, $MnO_2$ oder $Mn_3O_4$ sowie ein Oxid des Metalls M bereitzustellen; wobei M aus der Gruppe ausgewählt ist, welche die Elemente Ti und Al oder eine Mischung derselben umfasst;
b) die Mischung zu zerkleinern,
c) die Mischung auf eine Temperatur von mehr als 900 °C zu erhitzen,
d) der Mischung eine Verbindung auf Basis von Lithium zuzusetzen,
e) die Mischung auf eine Temperatur 700 °C bis 820 °C zu erhitzen.

15. Verfahren gemäß dem Anspruch 14, wobei die Temperatur in Schritt e) 730 bis 800 °C beträgt.

16. Verfahren nach einem der Ansprüche 14 bis 15, wobei es sich bei der Verbindung auf Basis von Lithium um $Li_2CO_3$ handelt.

17. Verfahren nach einem der Ansprüche 14 bis 16, wobei die Menge an Nickel, die vor der Synthese der Spinellphase in der Mischung vorliegt, einem stöchiometrischen Koeffizienten von 0,47 bis 0,52 entspricht.

**18.** Verfahren nach einem der Ansprüche 17, wobei die Menge an Nickel, die vor der Synthese der Spinellphase in der Mischung vorliegt, einem stöchiometrischen Koeffizienten von 0,49 bis 0,51 entspricht.

FIG. 1

Pile bouton : Li // spinelle 5V ; EC-PC-3DMC LiPF$_6$ 1.0M
1$^{ère}$ charge + 1$^{ère}$ décharge

Tension cellule (V)

Capacité (mAh/g)

— Exemple 4 (Spi5Ti19)
· · · Exemple 3 (Spi5Ti191)
– – Exemple 2 (Spi5Ti21)
—○— Exemple 5 (Spi5Ti21 + 5% NMC)

EP 1 860 713 B1

FIG. 2

Pile bouton : Li // spinelle 5V ; EC-PC-3DMC LiPF$_6$ 1.0M
3$^{ème}$ charge + 3$^{ème}$ décharge

Tension cellule (V)

Capacité (mAh/g)

Exemple 4 (Spi5Ti19)

Exemple 3 (Spi5Ti191)

Exemple 2 (Spi5Ti21)

Exemple 5 (Spi5Ti21 + 5% NMC)

EP 1 860 713 B1

FIG. 3

EP 1 860 713 B1

FIG. 4

**4/5A  EC/PC/3DMC LiPF$_6$ 1.0M**

Legend:
- Exemple 4 (4/5A-Spi5Ti19//graphite) ; fading C/10
- Exemple 2 (4/5A-Spi5Ti21//graphite) ; fading C/10
- ■ Exemple 4 (test de puissance sur 4/5A) ; D/2 ; D
- ▲ Exemple 2 (test de puissance sur 4/5A) ; D/2 ; D

Y-axis: Capacité réversible (%)

X-axis: Nombre de cycles

EP 1 860 713 B1

## RÉFÉRENCES CITÉES DANS LA DESCRIPTION

**Documents brevets cités dans la description**

- FR 2831993

- US 6337158 B

**Littérature non-brevet citée dans la description**

- Preparation and electrochemical properties of high-voltage cathode materials, LiMyNi0.5-yMn1.5O4 (M=Fe, Cu, Al, Mg ; y=0.0-0.4. *Journal of Power,* 2003, vol. 115, 332-345